Europäisches-Patentamt

European Patent Office

Office européen des brevets

(19)

(11) Veröffentlichungsnummer: **0 231 302**
B1

# EUROPÄISCHE PATENTSCHRIFT

(12)

(45) Veröffentlichungstag der Patentschrift:
10.01.90

(21) Anmeldenummer: 86904801.7

(22) Anmeldetag: 21.07.86

(86) Internationale Anmeldenummer:
PCT/EP 86/00427

(87) Internationale Veröffentlichungsnummer:
WO 87/00597 (29.01.87 Gazette 87/3)

(51) Int. Cl.⁴: **F 16 K 5/20**, F 16 K 25/02

(54) ABSPERRARMATUR IN FORM EINES KUGELHAHNES.

(30) Priorität: 23.07.85 DE 3526258

(43) Veröffentlichungstag der Anmeldung:
12.08.87 Patentblatt 87/33

(45) Bekanntmachung des Hinweises auf die Patenterteilung:
10.01.90 Patentblatt 90/2

(84) Benannte Vertragsstaaten:
AT BE CH DE FR GB IT LI LU NL SE

(56) Entgegenhaltungen:
CH-A- 214 969
LU-A- 56 422
US-A- 3 473 554
US-A- 3 765 440

(73) Patentinhaber: Ruhrgas Aktiengesellschaft,
Huttropstrasse 60 Postfach 10 32 52,
D-4300 Essen 1 (DE)

(72) Erfinder: LEMBSER, Gerhard, Nesslerstrasse 53,
D-4000 Düsseldorf 13 (DE)

(74) Vertreter: Zenz, Joachim Klaus, Dipl.-Ing. et al, ZENZ &
HELBER Patentanwälte Am Ruhrstein 1,
D-4300 Essen 1 (DE)

## Beschreibung

Die Erfindung betrifft eine Absperrarmatur in Form eines Kugelhahnes, bei dem in einem zuström- und abströmseitige Rohrstutzen aufweisenden Gehäuse ein über eine Schaltwelle drehbares Kugelküken gelagert ist, zwischen dessen sphärischer Umfangsfläche und dem Gehäuse in der Absperrstellung abströmseitig ein um die Rohrstutzenachse etwa konzentrisch umlaufendes Metall- Metall Primärdichtsystem gebildet wird, wobei das Primärdichtsystem durch eine zur Rohrstutzenachse konzentrische Ringnut geteilt ist, in die eine durch die Gehäusewand durchgeführte Kontrolleitung eines Bleed-Systems mündet.

Von den verschiedenen bekannten Absperrarmaturen, z.B. Schiebern, Ventilen, Hähnen, Klappen usw. haben sich beim Bau und Betrieb von Hochdruckleitungen im unteren bis mittleren Durchmesserbereich, d.h. bis etwa DN 400, sowohl Schieber als auch Hähne, im oberen Durchmesserbereich (DN 500 bis DN 1 200) überwiegend Kugelhähne durchgesetzt. Letztere haben nur einen Schaltweg von 90°. Die wirksame Druckdifferenzfläche entspricht bei schwimmenden Kugelküken in der Regel dem gesamten Anschlußquerschnitt und bei doppelt gelagerten Kugelküken dem Ringquerschnitt der Dichtungsfläche in Addition zu den Lagerkräften. Kugelhähne haben daher gegenüber Schiebern den Vorteil, daß die beim Schalten zu leistende Schaltarbeit wesentlich kleiner ist, so daß auch große Armaturen in Form von Kugelhähnen über ein Vorgelege ohne motorischen Antrieb von Hand schaltbar sind.

Die Dichtsysteme von Absperrarmaturen sind in Abhängigkeit von der Bauart mehr oder weniger dem Einfluß des Transportmediums ausgesetzt und können insbesondere durch Feststoffteilchen beschädigt werden. Metallische Dichtelemente sind naturgemäß verschleißresistenter als nichtmetallische Dichtungen. Kugelhähne mit nichtmetallischen Hauptabdichtsystemen sind daher für Leitungen und Anlagen, in denen das Transportmedium Feststoff mitführen kann, weniger geeignet.

Die metallische Dichtung bei Kugelhähnen erfordert aufgrund der komplexen geometrischen Form der Dichtelemente einen hohen Fertigungsaufwand und relativ hohe Anpreßkräfte, um einen blasendichten Abschluß zu gewährleisten. In der Praxis haben sich für Kugelhähne Dichtsystem aus einer Kombination von primär metallischen und sekundär nichtmetallischen Werkstoffen als relativ verschleißfest erwiesen.

Zur Durchführung verschiedener Reparaturen und Inspektionsarbeiten ist die zuverlässige Kontrolle der Dichtfunktion unter Betriebsbedingungen unumgänglich. Einrichtungen zum Nachweis der Dichtfunktion werden als «Block- and Bleed-System» bezeichnet.

Im allgemeinen wird die Dichtfunktion durch Entspannen des Gehäuses über die Sumpfentleerungsleitung nachgewiesen. Sowohl bei doppelt gelagerten als auch bei schwimmend gelagerten Kugelküken erfordert der Nachweis der Dichtfunktion über die Gehäuseentleerung beweglich gelagerte Dichtringe, die den Bewegungen des Kugelkükens folgen. Die Anpreßkräfte werden über Federn in Verbindung mit druckbeaufschlagten Ringflächen erzeugt. Bei schwimmend gelagerten Kugelküken treten abströmseitig sehr hohe Kräfte für das äußere Dichtsystem aufgrund der Druckdifferenz über die gesamte Querschnittsfläche auf; anströmseitig hat der Dichtungsträger vergleichsweise große Axialbewegungen auszugleichen.

Beweglich gelagerte Dichtungsträger erfordern zwei unabhängig voneinander wirkende dynamische Dichtsysteme, nämlich eine Abdichtung zwischen Kugelküken und Dichtungsträger und eine Abdichtung zwischen Dichtungsträger und Armaturengehäuse. Der fertigungstechnische Aufwand von Kugelhähnen zugeordneten beweglichen Dichtsystemen ist erheblich. Außerdem kommt es durch Eindringen und Ablagerung von Feststoffteilchen vor allem im inneren Dichtsystem häufig zu Funktionsstörungen insbesondere am Block- and Bleed-System. Die Komplexität herkömmlicher Abdichtsysteme zumal in Verbindung mit einem Block- and Bleed-System war bisher Ursache für eine Vielzahl von Funktionsstörungen und aufwendigen Reparaturen oder Austauschmaßnahmen.

Eine Absperrarmatur der eingangs genannten Art ist aus der US-A-3 473 554 bekannt. Dort greift das Kugelküken mit einem balligen Ansatz in eine Ausnehmung am Boden des Gehäuses ein, während es an seinem oberen Ende von der Schaltwelle gehalten wird. Diese Schaltwelle ist nicht nur drehbar, sondern auch in senkrechter Richtung hin- und herbewegbar. Sie weist einen abgeschrägten Abschnitt aud, der in der Lage ist, das Kugelküken bezüglich der balligen Lagerung zu kippen. Die Anordnung ist so getroffen, daß das Kugelküken aus der Öffnungsstellung in die Schließstellung gedreht und sodann durch Absenken der Schaltwelle gegen des Sitz gepreßt wird. Das entstehende Primärdichtsystem ist eine Metall- Metall Dichtung, aber die Flächen des Kugelkükens und des Sitzes des Gehäuses sind nicht komplementär gekrümmt. Der Öffnungsvorgang spielt sich umgekehrt ab, d.h. das Kugelküken wird erst vom Sitz abgehoben — was nur bei relativ niedrigen Drücken möglich ist — und sodann in die Öffnungsstellung gedreht. Die Armatur kann auch noch mit einer Weichdichtung arbeiten, welche in einem Ring angeordnet ist, der seinerseits im Gehäuse sitzt. Das Dichtsystem ist also relativ kompliziert, wobei zu berücksichtigen ist, daß zwischen dem Ring und dem Gehäuse eine zusätzliche Abdichtung vorhanden sein muß. Ferner ergeben sich die oben bereits erwähnten, mit Weichdichtungen verbundenen Nachteile in verstärktem Maße, da nämlich durch das Verkippen des Kugelkükens beim Öffnungsvorgang ein Spalt entsteht, durch den das Medium mit erhöhter Geschwindigkeit hindurchströmt. Dabei kommt es zu einem unvermeidbar hohen Verschleiß des Primärdichtsystems. Dies gilt insbesondere dann, wenn das Medium mit Verunreinigungen beladen ist.

Der Erfindung liegt die Aufgabe zugrunde, einen in allen Druckstufen und Nennweiten einsetzbaren Kugelhahn zur Verfügung zu stellen, der sowohl über ein einfaches und robustes Dichtsystem ohne bewegliche Teile als auch über ein Block- und Bleed-System verfügt, mit dessen Hilfe der dichte Abschluß des Kugelhahns in Funktionsstellung zuverlässig nachweisbar ist.

Die Erfindung geht aus von der Absperrarmatur der eingangs genannten Art und löst die oben genannte Aufgabe vorzugsweise dadurch, daß das Kugelküken schwimmend gelagert ist und durch die Druckdifferenz, die sich in der Absperrstellung zwischen Zustörm- und Abströmseite aufbaut, mit seiner sphärischen Umfangsfläche unter Bildung des Primärdichtsystems gegen eine komplementär gekrümmte, ringförmige Gehäusedichtfläche gedrückt wird, wobei die Ringnut in der Gehäusedichtfläche ausgebildet ist.

Eine alternative Lösung der Erfindungsaufgabe besteht darin, daß das Kugelküken schwimmend gelagert ist und durch die Druckdifferenz, die sich in der Absperrstellung zwischen Zuström- und Abströmseite aufbaut, mit seiner sphärischen Umfangsfläche unter Bildung des Primärdichtsystems gegen eine komplementär gekrümmte, ringförmige Gehäusedichtfläche gedrückt wird, wobei die Ringnut in der sphärischen Umfangsfläche des Kugelkükens ausgebildet ist und in der Absperrstellung von der ringförmigen Gehäusedichtfläche vollständig abgedeckt wird.

Zwar ist aus der LU-A-56 422 die Verwendung einer Ringnut in einem Schließkörper bekannt, jedoch handelt es sich dort um eine Armatur anderer Art, nämlich um eine solche mit einem Schließkörper in Form einer schwenkbar gelagerten Klappe, die im übrigen mit Weichdichtungen versehen ist.

Außer dem Kugelküken und der Schaltwelle gibt es bei der erfindungsgemäßen Absperrarmatur keine beweglichen Einbauten. Die Primärdichtung wird durch metallische Dichtung unmittelbar zwischen dem Kugelküken und der sphärischen Dichtfläche bewirkt, wobei die zur Verfügung stehenden hohen Anpreßkräfte für einen blasendichten Abschluß sorgen. Durch die Anordnung der Ringnut in der Gehäusedichtfläche selbst gelingt der zuverlässige Nachweis des dichten Abschlusses in der Funktionsstellung.

Zur Reduzierung der Reibung können die Kugelküken- und Gehäusedichtflächen beschichtet sein.

In Weiterbildung der Erfindung ist vorgesehen, daß wenigstens ein elastischer und/oder elastisch gelagerter Dichtring konzentrisch zur Rohrstutzenachse und mit Abstand zur Ringnut im Bereich der Gehäusedichtfläche derart eingebaut ist, daß er einen durch Fertigungstoleranzen und/oder Lagerspiel des schwimmend gelagerten Kugelkükens gebildeten Spalt zwischen Gehäusedichtfläche und Kükenumfangsfläche bis zum Wirksamwerden des Primärdichtsystems zu schließen vermag. Dieser Dichtring wirkt als Hilfsdichtung beim Aufbau der Druckdifferenz zwischen Zuström- und Abströmseite. Geringe Druckunterschiede zwischen den beiden Druckseiten könnten sich nämlich ohne ein solches Hilfsdichtsystem durch Leckströme entlang der sphärischen Umfangsfläche des schwimmend gelagerten Kugelkükens ausgleichen. Durch dichten Verschluß des Ringspalts mittels einer einfachen Ringdichtung kann sich die Druckdifferenz zwischen den beiden Seiten des Kugelhahns aufbauen, wodurch das schwimmend gelagerte Kugelküken gegen die Gehäusedichtfläche gedrängt und das metallische Primärdichtsystem wirksam gemacht werden kann.

Vorzugsweise sind zwei Dichtringe mit axialem Abstand zu beiden Seiten der Ringnut im Bereich der Gehäusedichtfläche vorgesehen. Diese Ausführung ermöglicht eine Prüfung des dichten Verschlusses des Ringspalts zwischen Gehäusefläche und sphärischer Umfangsfläche des Kugelkükens durch die Hilfsdichtung in der Offenstellung des Kugelhahns und damit die ständige Überprüfung der Funktionsfähigkeit des Hilfsdichtsystems über das Bleed-System.

Um den Einsatz der erfindungsgemäßen Absperrarmaturen von der Strömungsrichtung unabhängig zu machen, ist in Weiterbildung der Erfindung vorgesehen, daß an den beiden Rohrstutzen benachbarten, sphärisch gekrümmten Gehäuseinnenflächen jeweils Gehäusedichtflächen mit koaxialen Ringnuten vorgesehen sind, die zu einer in der Drehachse des Kugelkükens liegenden, zur Rohrstutzenachse rechtwinkligen Ebene symmetrisch verlaufen.

Das Hilfsdichtsystem eignet sich in der erfindungsgemäßen Ausführung auch als Teil eines Nachdichtsystems für die Primärdichtung im Schadensfall. zu diesem Zweck ist ein elastisch verformbarer Druckring in einem Gehäuse-Ringkanal radial hinter dem Dichtring angeordnet und durch wenigstens eine, in den Gehäusekanal mündende Druckmittelleitung mit einem plastisch verformbaren Dichtmittel von außen beaufschlagbar. Bei dieser Ausführung sind die Dichtmittelkanäle durch die Hilfsdichtringe und elastisch verformbaren Ringe vor Eindrigen von Feststoffpartikeln geschützt. Das plastische Dichtmittel erhöht die Anpreßkraft zwischen den Hilfsdichtringen und dem Kugelküken. Vorzugsweise ist der Gehäusekanal entlang des Kanalgrundes mit einer konzentrischen Nut versehen, in die die Druckmittelleitung mündet.

Die Erfindung erfüllt daher alle Anforderungen für den uneingeschränkten Einsatz der Absperrarmatur im Hochdruckleitungs- und Anlagenbetrieb:

a) das Primärdichtsystem unmittelbar zwischen der Gehäusedichtfläche und dem schwimmend gelagerten Kugelküken ist ein bewährtes, einfaches und robustes Dichtsystem mit hohen Anpreßkräften und Minimierung beweglicher Einbauteile;

b) vor allem bei abriebfester Beschichtung von Kugelküken und Gehäusedichtflächen sind die Reibungskräfte und -momente für Kugelhähne so gering, daß eine handbetätigte Schaltung möglich ist;

c) das Primärdichtsystem kann gegen Temperatureinflüsse praktisch resistent gemacht werden;

d) der Kugelhahn kann einen freien Querschnitt entsprechend dem Anschlußdurchmesser haben;

e) das in die Gehäusedichtfläche integrierte Bleed-System ermöglicht den zuverlässigen Nachweis des dichten Abschlusses in der Funktionsstellung unter Betriebsbedingungen;

f) die Dichtelemente sind gegenüber Einwirkungen von Feststoffen sowie Erosion durch flüssige oder gasförmige Transportmedien resistent;

g) durch die elastisch gelagerten Hilfsdichtringe sind die Anforderungen an die Herstellungstoleranzen und damit die Fertigungskosten minimiert;

h) Prüfung des Hilfs- oder Sekundärdichtsystems in der Offenstellung des Kugelhahnes;

i) Montage- und Wartungsaufwand sind minimiert und die Anpassungsmöglichkeit für Nebeneinrichtungen ist optimiert; und

j) Funktionselemente für ein Nachdichtsystem sind bereits im Hilfsdichtsystem enthalten.

Im folgenden wird die Erfindung anhand eines in der Zeichnung schematisch dargestellten Ausführungsbeispiels näher erläutert. In der Zeichnung zeigen:

Fig. 1 einen horizontalen Axialschnitt durch den Kugelhahn (Schnittlinie I-I in Fig. 2), wobei das Kugelküken in der linken Figurenhälfte in Öffnungsstellung und in der rechten Figurenhälfte um 90° gedreht in der Sperrstellung gezeigt ist;

Fig. 2 eine Schnittansicht entlang der Schnittlinie II-II der Fig. 1; und

Fig. 3 eine schematische Darstellung des Ausschnitts A in Fig. 1 zur Erläuterung der erfindungsgemäß vorgesehenen Block- and Bleed-Anordnung.

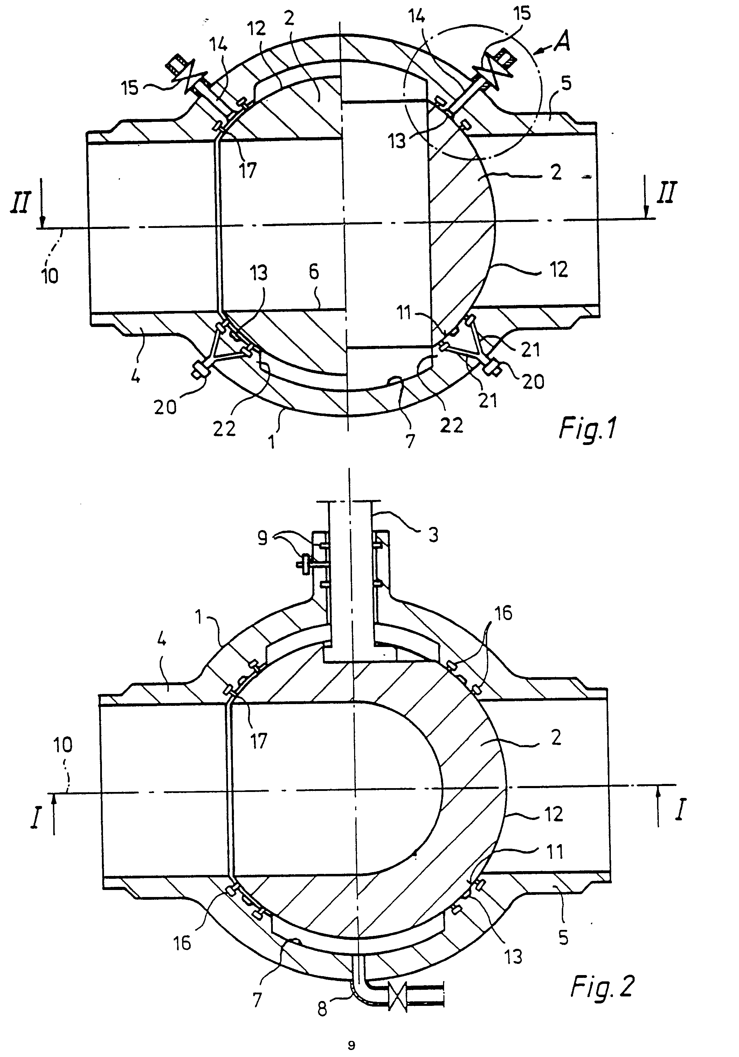

Der in den Figuren 1 und 2 dargestellte Kugelhahn weist ein voll verschweißtes Gehäuse 1, ein in diesem schwimmend gelagertes Kugelküken 2, ein Block- and Bleed-System (Ausschnitt A) und eine durch das Gehäuse abgedichtete durchgeführte Schaltwelle 3 zum Schalten des Kugelkükens 2 auf.

Das Gehäuse ist mit zwei koaxialen Rohrstutzen 4 und 5 mit einem dem Anschlußdurchmesser entsprechenden Innenquerschnitt versehen. Das Kugelküken 2 hat eine Bohrung 6 mit einem dem Querschnitt der Rohrstutzen 4 und 5 entsprechenden Durchmesser. Eine Gehäuseringnut 7 mit einer dem Bohrungsdurchmesser des Kugelkükens 2 entsprechenden Weite mündet am unteren Ende in eine Gehäuseentleerungsleitung 8. Der Schaltwellendurchführung ist ein Dichtsystem 9 zugeordnet, das den Leitungsdrücken entsprechend bemessen ist.

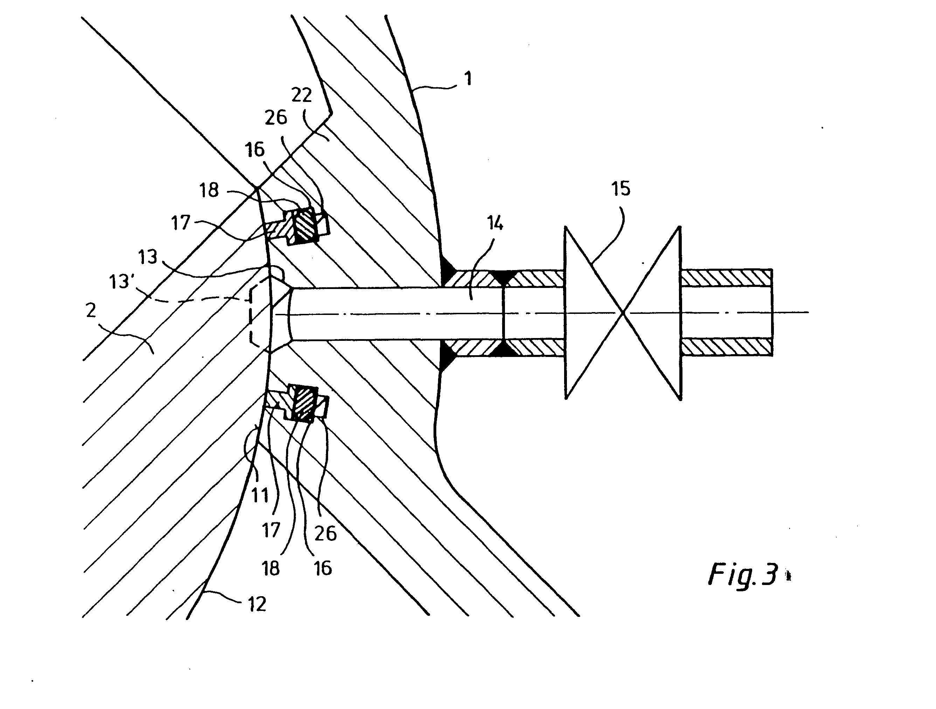

In der in den Figuren 1 und 2 jeweils auf der linken Seite dargestellten Offenstellung des Kugelkükens 2, bei der die Kükenbohrung 6 mit den zuström- und abströmseitigen Rohrstutzen 4 und 5 auf der zentralen Gehäuseachse 10 ausgerichtet ist, ist ein gewisses Einbauspiel zwischen den sphärischen Gehäuseinnenflächen 11 und den sphärischen Umfangsflächen 12 vorhanden, das in der linken Hälfte der Figuren 1 und 2 übertrieben deutlich dargestellt ist. Diese sphärischen Flächen 11 und 12 bilden gemäß Darstellung in der rechten Hälfte der Figuren 1 und 2 sowie in Fig. 3 im Betriebszustand der Absperrarmatur ein um die Achse 10 konzentrisch umlaufendes Primärdichtsystem. Die hohen Anpreßkräfte aufgrund der Druckdifferenz zwischen der in der Zeichnung links dargestellten Hochdruckseite und der dem rechten Rohrstutzen 5 des Gehäuses 1 zugeordneten Niederdruckseite sorgen für einen blasenfreien Abschluß entlang der abströmseitigen ringförmigen Gehäusedichtfläche 11.

Im Bereich der Gehäusedichtfläche 11 ist in einem ringförmigen Ansatz 22 der Gehäusewand 7 eine zum Gehäuseinnenraum hin offene Ringnut 13 ausgebildet, die die Gehäusedichtfläche in dem dargestellten Ausführungsbeispiel in der Mitte ihres Umfangssektors teilt. Von dieser Ringnut 13 geht eine Kontrolleitung 14 eines Bleed-Systems aus, von dem nur ein Ventil 15 schematisch dargestellt ist. Nut 13 und Kontrolleitung 14 müssen bei ordnungsgemäß schließendem Primärdichtsystem im Bereich der Gehäusedichtfläche 11 drucklos sein.

Mit Abstand zu beiden Seiten neben der Ringnut 13 sind in Ringkanäle 16 Dichtringe 17 eingebaut, die jeweils mit Hilfe eines am Gehäuse abgestützten Druckringes aus elastisch verformbarem Material elastisch gegen die Umfangsfläche 12 des Kugelkükens 2 gedrängt sind. Die beiden gekammerten Dichtringe 17 bilden ein Hilfs- bzw. Sekundärdichtsystem, das die Absperrarmatur in deren Betriebsstellung dicht verschließt, bevor eine Druckdifferenz zwischen den beiden Zu- und Abströmseiten aufgebaut und das Kugelkükens 2 in die in der rechten Hälfe der Figuren 1 und 2 dargestellte Dichtstellung axial verschoben ist. Nach dem Aufbau der Druckdifferenz und der metallischen Abdichtung unmittelbar zwischen Kugelküken 2 und Armaturengehäuse 1 ist das Hilfs- oder Sekundärdichtsystem 17, 18 ohne Bedeutung.

Bei Versagen der metallischen Primärdichtung entlang der Gehäusedichtfläche 11, nachgewiesen über das Bleed-System 13, 14, 15, kann ein in Fig. 1 schematisch dargestelltes Notabdichtsystem 20 wirksam gemacht werden. Zu diesem gehören das Gehäuse 1 durchsetzende und hinter den Ringen 18 in die zugehörigen Ringkanäle 16 mündende Druckmittelkanäle 21, durch die ein plastisch verformbares, im übrigen handelsübliches Dichtmittel von außen in die Kammern 16 des Hilfsdichtsystems eingepreßt werden kann. Entlang des Kanalgrundes ist eine umlaufende Nut 26 (Fig. 3) in der Gehäusewand ausgebildet, durch die sich das Dichtmittel auf eine große freie Angriffsfläche hinter den Ringen 18 verteilen kann. Die Druckmittelkanäle werden durch die Dichtringe 17, 18 des Hilfsdichtsystems vor dem Eindringen von Feststoffteilchen geschützt. Das plastische Dichtmittel erhöht die Anpreßkraft zwischen den Dichtringen 17 und dem Kugelküken 2 bzw. dessen sphärischer Umfangsfläche 12.

Das Gehäuse 1 ist in dem dargestellten Ausführungsbeispiel zu beiden Seiten einer durch die Schaltachse und rechtwinklig zur Gehäuseachse 10 verlaufenden Ebene symmetrisch ausgebildet. Demzufolge sind beiden Rohrstutzen 4 und 5 ringförmige sphärische Gehäusedichtflächen 11 zugeordnet, die in Abhängigkeit von der Richtung des Druckgefälles in der Funktionsstellung des Kükens 2 wirksam werden. Beide Primärdichtsysteme auf beiden Gehäuseseiten sind übereinstimmend ausgebildet. In Zuordnung zu beiden Primärdichtflächen sind Ringnuten 13 und Sekundärdichtsysteme bzw. Notabdichtsysteme vorgesehen. Daher kann jeder der beiden Rohrstutzen 4 und 5 als zuströmseitiger oder abströmseitiger Rohrstutzen des Systems verwendet werden.

In Fig. 3 ist im Kugelküken 2 gestrichelt eine Ringnut 13' gezeigt, die in der dargestellten Absperrstellung mit der durch die Gehäusedichtfläche 11 aus der Gehäusewand austretenden Kontrolleitung 14 des Blees-Systems kommuniziert und die Funktion der in ausgezogenen Linien dargestellten Gehäuseringnut 13 erfüllen kann.

## Patentansprüche

1. Absperrarmatur in Form eines Kugelhahnes, bei dem in einem zuström- und abströmseitige Rohrstutzen (4, 5) aufweisenden Gehäuse (1) ein über eine Schaltwelle (3) drehbares Kugelküken (2) gelagert ist, zwischen dessen sphärischer Umfangsfläche und dem Gehäuse in der Absperrstellung abströmseitug ein um die Rohrstutzenachse (10) etwa konzentrisch umlaufendes Metall-Metall Primärdichtsystem gebildet wird, wobei das Primärdichtsystem durch eine zur Rohrstutzenachse konzentrische Ringnut (13) geteilt ist, in die eine durch die Gehäusewand durchgeführte Kontrolleitung (14) eines Bleed-Systems mündet, dadurch gekennzeichnet, daß das Kugelküken (2) schwimmend gelagert ist und durch die Druckdifferenz, die sich in der Absperrstellung zwischen Zuström- und Abströmseite aufbaut, mit seiner sphärischen Umfangsfläche unter Bildung des Primärdichtsystems gegen eine komplementär gekrümmte, ringförmige Gehäusedichtfläche (11) gedrückt wird, wobei die Ringnut (13) in der Gehäusedichtfläche (11) ausgebildet ist.

2. Absperrarmatur in Form eines Kugelhahnes, bei dem in einem zuström- und abströmseitige Rohrstutzen (4, 5) aufweisenden Gehäuse (1) ein über eine Schaltwelle (3) drehbares Kugelkükens (2) gelagert ist, zwischen dessen sphärischer Umfangsfläche und dem Gehäuse in der Absperrstellung abströmseitig ein um die Rohrstutzenachse (10) etwa konzentrisch umlaufendes Metall-Metall Primärdichtsystem gebildet wird, wobei das Primärdichtsystem durch eine zur Rohrstutzenachse konzentrische Ringnut (13') geteilt ist, in die eine durch die Gehäusewand durchgeführte Kontrolleitung (14) eines Bleed-Systems mündet, dadurch gekennzeichnet, daß das Kugelküken (2) schwimmend gelagert ist und dadurch die Druckdifferenz, die sich in der Absperrstellung zwischen Zuström- und Abströmseite aufbaut, mit seiner sphärischen Umfangsfläche unter Bildung des Primärdichtsystems gegen eine komplementär gekrümmte, ringförmige Gehäusedichtfläche (11) gedrückt wird, wobei die Ringnut (13') in der sphärischen Umfangsfläche des Kugelkükens (2) ausgebildet ist und in der Absperrstellung von der ringförmigen Gehäusedichtfläche (11) vollständig abgedeckt wird.

3. Absperrarmatur nach einem der Ansprüche 1 oder 2, dadurch gekennzeichnet, daß das Kugelküken (2) und die Gehäusedichtfläche (11) mit einer die Reibungskräfte minimierenden abriebfesten Beschichtung versehen sind.

4. Absperrarmatur nach einem der Ansprüche 1 bis 3, dadurch gekennzeichnet, daß wenigstens ein elastischer und/oder elastisch gelagerter Dichtring (17, 18) konzentrisch zur Rohrstutzenachse (10) und mit Abstand zur Ringnut (13) im Bereich der Gehäusedichtfläche (11) derart eingebaut ist, daß er einen durch Fertigungstoleranzen und/oder Lagerspiel des schwimmend gelagerten Kugelkükens (2) gebildeten Spalt zwischen Gehäusedichtfläche und Kükenumfangsfläche (12) bis zum Wirksamwerden des Primärdichtsystems (11, 12) zu schließen vermag.

5. Absperrarmatur nach Anspruch 4, dadurch gekennzeichnet, daß zwei Dichtringe (17, 18) mit axialem Abstand zu beiden Seiten der Ringnut (13) im Bereich der Gehäusedichtfläche (11) vorgesehen sind.

6. Absperrarmatur nach einem der Ansprüche 1 bis 5, dadurch gekennzeichnet, daß an den beiden Rohrstutzen (4, 5) benachbarten, sphärisch gekrümmten Gehäuseinnenflächen jeweils Gehäusedichtflächen (11) mit koaxialen Ringnuten (13) vorgesehen sind, die zu einer in der Schaltachse des Kugelkükens (2) liegenden, zur Rohrstutzenachse (10) rechtwinkligen Ebene symmetrisch verlaufen.

7. Absperrarmatur nach einem der Ansprüche 1 bis 6, dadurch gekennzeichnet, daß ein elastisch verformbarer Ring (18) in einem Gehäuseringkanal (16) radial hinter dem Dichtring (17) angeordnet und am Kanalgrund abgestützt ist.

8. Absperrarmatur nach einem der Ansprüche 4 bis 7, dadurch gekennzeichnet, daß der Dichtring (17, 18) in einem Gehäusekanal (16) gelagert und durch wenigstens eine in den Gehäusekanal (16) mündende Druckmittelleitung (21) zur Bildung eines Notabdichtsystems mit einem plastischen Dichtmittel beaufschlagbar ist.

9. Absperrarmatur nach Anspruch 8, dadurch gekennzeichnet, daß der Gehäusekanal (16) entlang des Kanalgrundes mit einer konzentrischen Nut (26) versehen ist, in die die Druckmittelleitung (21) mündet.

## Claims

1. A shut-off device in the form of a ball valve wherein a ball means (2) rotatable by means of a controlling stem (3) is located in a body (1) provided with upstream and downstream pipe stubs (4, 5), the spherical circumference of said ball means mating in the closed position of said shut-off device with the body to form a metal-to-metal primary sealing system substantially concentric with the stub axis (10), said primary sealing system being split by an annular groove (13 concentric with said stub axis and being connected with the control line (14) of a bleed system passing through said body, characterized in that said ball means (2) is of the floating type and in that in the closed position the pressure difference between the upstream and the downstream sides of said ball means presses said spherical circumference of said ball means against a correspondingly bent annular body sealing surface (11) to constitute the primary sealing system, said annular grove (13) being in the sealing surface (11) of said body.

2. A shut-off device in the form of a ball valve wherein a ball means (2) rotatable by means of a controlling stem (3) is located in a body (1) provided with upstream and downstream pipe stubs (4, 5), the spherical circumference of said ball means mating in the closed position of said shut-off device with the body to form a metal-to-metal primary sealing system substantially concentric with the stub axis (10) said primary sealing system being split by an annular groove (13') concentric with said stub axis and being connected with the control line (14) of a bleed system passing through said body characterized in that said ball means (2) is of the floating type and in that in the closed position the pressure difference between the upstream and the downstream sides of said ball means presses said spherical circumference of said ball means against a correspondingly bent annular body selaing surface (11) to constitute the primary sealing system, said annular groove (13') being in the spherical circumference of said ball means (2) and being entirely covered by said annular body sealing surface (11) in the closed position of said shut-off device.

3. A shut-off device according to any one of claims 1 or 2 characterized in that said ball means (2) and said body sealing surface (11) are coated by an abrasion resistant material, thereby minimizing friction.

4. A shut-off device according to any one of claims 1 through 3 characterized in that at least one elastic sealing ring and/or sealing ring carried by elastic support means (17, 18) concentric with said stub axis (10) and spaced relative to said annular groove (13) is provided in the area of said body sealing surface (11) to close a gap between said body sealing surface and the circumference (12) of said ball means due to manufacturing tolerances and/or tolerances required for said ball means (2) to float, until said primary sealing system (11, 12) is effective.

5. A shut-off device according to claim 4 characterized in that two such sealing rings (17, 18) spaced axially relative to each other are provided on the two sides of said annular groove (13) in the area of said body sealing surface (11).

6. A shut-off device according to any one of claims 1 through 5 characterized in that a body sealing surface (11) with a coaxial annular groove (13) is provided on each spherically bent inner body surface adjacent to each pipe stub (4, 5) said coaxial grooves being symmetric in a plane passing through the axis of said stem which is at a right angle relative to said pipe stub axis (10).

7. A shut-off device according to any one of claims 1 through 6 characterized in that a ring (18) allowing elastic deformation is arranged in an annular duct (16) in said body radially outward from said sealing ring (17) and supported on the floor of said duct.

8. A shut-off device according to any one of claims 4 through 7 characterized in that said sealing ring (17, 18) is supported in a duct (16) in said body and may be pressurized through at least one pressurizing line (21) opening into said duct (16) for emergency sealing by a plastic sealing agent.

9. A shut-off device according to claim 8 characterized in that a concentric groove (26) is provided in the floor of said duct (16), said pressurizing line (21) opening into said groove.

**Revendications**

1. Dispositif obturateur sous forme de robinet à boisseau sphérique conçu de façon à ce qu'un boisseau sphérique (2) qui peut être tourné par un tige de commande est logé dans le corps (1) d'un robinet muni de raccords d'entrée et de sortie (4, 5), qu'en position de fermeture la surface sphérique de la circonférence du boisseau et celle du corps forment côté sortie, un système d'étanchéité principal métal/métal, disposé de manière à peu près concentrique autour de l'axe du raccord (10), le système d'étanchéité principal étant divisé par une rainure annulaire (13) disposée concentriquement par rapport de l'axe du raccord et dans laquelle débouche la conduite de régulation (14) d'un dispositif de purge, caractérisé par le fait que le boisseau sphérique (2) est logé de façon flottante et que par la différence de pression qui s'établit en position de fermeture entre le côté entrée et le côté sortie, sa surface sphérique est appuyée contre la surface annulaire d'étanchéité (11) du corps d'une courbure correspondante, pour constituer le système d'étanchéité principal, la rainure annulaire (13) étant aménagée dans la surface d'étanchéité (11) du corps.

2. Dispositif obturateur sous forme de robinet à boisseau sphérique conçu de façon à ce qu'un boisseau sphérique (2) qui peut être tourné par un tige de commande est logé dans le corps (1) d'un robinet muni de raccords d'entrée et de sortie (4, 5), qu'en position de fermeture la surface sphérique de la circonférence du boisseau et celle du corps forment, côté sortie, un système d'étanchéité principal métal/métal, disposé de manière à peu près concentrique autour de l'axe du raccord (10), le système d'étanchéité principal étant divisé par une rainure annulaire (13') disposée concentriquement par rapport de l'axe du raccord et dans laquelle débouche la conduite de régulation (14) d'un dispositif de purge, caractérisé par le fait que le boisseau sphérique (2) est logé de façon flottante et que par la différence de pression qui s'établit en position de fermeture entre le côté entrée et le côté sortie, sa surface sphérique est appuyée contre la surface annulaire d'étanchéité (11) du corps d'une courbure correspondante, pour constituer le système d'étanchéité principal, la rainure annulaire (13') étant aménagée dans la surface sphérique de la circonférence du boisseau (2) et en position de fermeture complètement couverte par la surface annulaire d'étanchéité (11) du corps.

3. Dispositif obturateur selon l'une quelconque des revendications 1 ou 2, caractérisé par le fait que le boisseau sphérique (2) et la surface d'étanchéité (11) du corps sont munies d'une couche anti-abrasive minimisant les forces de frottement.

4. Dispositif obturateur selon l'une quelconque des revendications 1 à 3, caractérisé par le fait qu'au moins une bague d'étanchéité (17, 18) élastique ou à logement élastique est incorporée au niveau de la surface d'étanchéité (11) du corps, concentriquement par rapport à l'axe du raccord (10) et à une distance de la rainure annulaire (13) de façon à bloquer toute fente due à des tolérances de fabrication et/ou au jeu entre la surface d'étanchéité du corps et la circonférence du boisseau sphérique (12) à logement flottant, jusqu'à ce que le système d'étanchéité principal (11, 12) aura pris effet.

5. Dispositif obturateur selon la revendication 4 catactérisé par le fait que deux bagues d'étanchéité (17, 18) sont prévues à une distance axiale de part et d'autre de la rainure annulaire (13) au niveau de la surface d'étanchéité (11) du corps.

6. Dispositif obturateur selon l'une quelconque des revendications 1 à 5 caractérisé par le fait que les parties intérieures à courbure sphérique du dispositif obturateur qui joignent chacun des deux raccords (4, 5) sont munies de surfaces d'étanchéité (11) avec des rainures annulaires (13) coaxiales, disposées symétriquement à un plan à l'angle droit par rapport à l'axe du raccord (10), situé dans l'axe de la tige du boisseau sphérique (2).

7. Dispositif obturateur selon l'une quelconque des revendications 1 à 6, caractérisé par le fait qu'une bague élastiquement déformable (18) est placée dans un caniveau annulaire (16) amenagé dans le corps du dispositif obturateur derrière la bague d'étanchéité (17) en direction radiale et appuyée sur le fond du caniveau.

8. Dispositif obturateur selon l'une quelconque des revendications 4 à 7, caractérisé par le fait que la bague d'étanchéité (17, 18) est logée dans un caniveau (16) amenagé dans le corps du dispositif obturateur et qu'elle peut être pressurisée par un étanchéifiant plastique, amené par au moins une conduite de pressuration (21), pour former un système d'étanchéité de secours.

9. Dispositif obturateur selon la revendication 8, caractérisé par le fait que le fond du caniveau (16) est muni d'une rainure concentrique dans laquelle débouche la conduite de pressurisation (21).

Fig.1

Fig.2

Fig.3

EP 0 231 302 B1